# EUROPEAN PATENT SPECIFICATION

(11) **EP 0 502 170 B1**
(45) Date of publication and mention of the grant of the patent: **11.12.1996**
(21) Application number: 91917630.5
(22) Date of filing: 19.09.1991
(51) Int. Cl.: G11B 7/00

(54) **A METHOD FOR OVERWRITING INFORMATION ON OPTICAL DISK MEDIUM**
VERFAHREN ZUM ÜBERSCHREIBEN VON DATEN AUF EINEM OPTISCHEN SCHEIBEMEDIEN
METHODE SERVANT A ECRASER DES INFORMATIONS SUR UN SUPPORT DE DISQUE OPTIQUE

(30) Priority: 24.09.1990 US 586649; 13.09.1991 US 759324
(43) Date of publication of application: 09.09.1992
(73) Proprietor: EASTMAN KODAK COMPANY, Rochester, New York 14650-2201 (US)
(72) Inventor: GUPTA, Mool Chand, Webster, NY 14580 (US)
(74) Representative: Brandes, Jürgen, Dr. rer. nat.
(86) International application number: US9106780
(87) International publication number: WO9205545

(56) References cited:
- EP-A- 0 265 971
- US-A- 4 538 159

## Description

Optical recording elements are very well known in the art. The typical element has a layer that is capable of being thermally deformed on the application of focused energy, for example laser energy. United States Patent 3,475,760, for example, describes an element for recording information as a thermal deformation pattern. The element includes a layer of a solvent coated thermoplastic material on a support. When the thermoplastic material is deformed by a laser beam, the information can be detected by scanning the deformations with another laser since the deformation from recording can scatter or otherwise disturb the reading laser beam and this can be detected, for example by detecting the transmission through the element or, if the support of the element is reflective, by detecting the reflectance.

A variety of recording schemes have been disclosed. For example, in copending commonly assigned European Publication No. 372,051, 16 November 1989, a scheme has been disclosed which allows for the recording of multilevel optical recording. In that method, the recording laser beam is modulated between two powers which powers are capable of forming deformations of different depths. In this way, multilevel recording is accomplished. Erasure of previously recorded information is not disclosed.

It has been disclosed in a variety of references that the thermally formed deformations can be removed, such as with heating, so as to erase the information carried in the deformations. Thus, the elements are said to be erasable. In U.S. Patent 4,380,769 patent for example, it is disclosed that erasing can be carried out by heating the whole surface of the recorded layer, such as with a hot airstream.

In United States Patent 4,530,080 there is disclosed a method of recording information using two laser beams. One beam comes from a powerful inexpensive laser and is of a relatively large diameter. This beam is used to preheat the optical recording material. Another sharply focused laser is also used in this method. Individually, the beams are at less than the threshold level for recording on the material. Together, however, the beams have sufficient energy density to cause recording. Erasure in this method is accomplished by turning the sharply focused laser off and turning up the power of the broad laser. It will be appreciated that it is not possible to overwrite using this method. The recorded deformations must first be removed by the broad laser beam in a separate scan of the optical recording material.

It would obviously be desirable to be able to overwrite information on an already recorded erasable layer. By overwriting, we mean that new information is written directly on the old information without the need for a separate erasing step as in the '080 patent mentioned above.

Several references teach the erasure of overcoated optical recording elements of the type wherein the information is recorded using thermal deformation. My article entitled ERASABLE LASER RECORDING IN AN ORGANIC DYE-BINDER OPTICAL DISK MEDIUM, J. Appl. Phys 60(8), 15 October 1986 teaches that an optical recording element of this type can be erased using a low power laser. However, erasure was said to take several revolutions of the optical disk and this, of course, would teach away from any attempts to overwrite already recorded information. My article with Strome entitled LASER RECORDING ON AN OVERCOATED ORGANIC DYE-BINDER MEDIUM, Applied Optics, Vol 23 No.22, 15 November 1984 is similar.

Thus, the problem to be solved is to provide a method wherein information can be recorded on an optical recording element by thermal deformation whereby any information already recorded on the element is overwritten by the process.

This problem is substantially solved by the present invention as defined in claim 1.

The present invention uses an overcoated recording layer. While overcoated recording layers of this type are well known, (see for example United States Patent 4,340,655 and my articles refered to above) it was unexpected that such an overcoated layer would provide for the ability to overwrite already recorded information by using single beam. The present method is different from the methods described in my articles mentioned above since erasing occures in the same pass as the writing. Thus, true overwriting is achieved.

In accordance with the present invention, the recording power is varied between a first low power level that is sufficient to erase any deformations that may already be in the recording layer and a second higher power level that is sufficient to form deformations. The exact power levels necessary to accomplish these objectives will vary depending on the specific recording layer, for example the amount of dye that might be in the layer, that is the optical absorption coefficient, the thickness of the layer, as well as other factors. The nature and thickness of the overcoat layer influence the exact recording powers. The exact recording powers thus must be selected after the desired materials have been determined. Simple experiments are then performed to determine the exact power levels for optimum performance.

The erasure power is chosen so that the material that is pushed aside in the formation of the deformations flows back into place. This is facilitated by the tension applied to the material by the overcoat. The overcoat also helps in keeping the recording material in the vicinity of the deformation. If no overcoat material is present, the recording material is ablated away or is scattered to a position remote from the deformation and is thus not available to refill the deformation during the erasure step.

The write power in the method of the invention should be sufficient to form the deformation but not high enough to cause the overcoat to rupture. The exact power is thus a function of the specific overcoat material and thickness as well as the nature of the recording layer.

When the information on the element is read, the power of the reading laser is kept below the level that would erase the information. As a typical example, illustrated below, the erase power was 4 mW, the write power was 10 mW and the read power was 0.5 mW.

As noted above, my articles relate to the same type of element. However, erasure was assumed to require complete return to the optical density of the unrecorded state. Thus, erasure required a separate laser exposure and several revolutions to achieve what was thought to be needed for complete erasure. It has now been found that when erasing at the same time as recording, as in the present method, useful write once performance is achieved. None of these references attempt to erase at the same time as record.

The optical recording elements that can be used in the preparation of the recorded elements of the invention are conventional. Typically, they comprise a reflective support and a radiation sensitive optical recording layer. The preferred optical recording elements comprise, in the following order, an aluminum support, a smoothing layer, a metal reflective layer and an optical recording layer. The element also includes an overcoat layer of the type known in the art, for example, as disclosed in U.S. Patent 4,527,173.

One preferred overcoat material is the overcoat described in United States patent 4,340,655. This patent describes the use of water soluble polymers having a glass transition temperature when dry of at least 100°C.

A preferred overcoat is a layer of silicon mono-oxide. This film can be vacuum evaporated with an electron beam evaporator using a silicon mono-oxide powder as the target. The thickness of this film as with any other overcoat can vary. The preferred thickness is 210nm. Other types of inorganic films are also useful including, for example, layers of silicon dioxide and aluminum oxide. These films are preferred since they can be deposited in thick films without cracking or adhesion failure.

Films of other materials are also useful. Spin coatable films such as photocrosslinkable quaternary ammonium salt polymers which can be coated from water are examples.

The aluminum support can be coated with the smoothing layer formulation prior to the coating of the reflective layer and the recording layer. The preferred smoothing layer compositions are described in U. S. Patents 4,446,223 and 4,619,890. In some embodiments it may be desirable to first coat the aluminum support with an antireflecting layer as is described in European Publication No. 326078. Following coating, polymerization of the fluid produces a smooth surface on the support. The thus formed smoothing layer can be made reflective by vacuum metallization of the smooth surface. Useful metals for this purpose include gold and aluminum.

Useful recording layers, preferably comprising a dye and a binder, are coated by any of a wide variety of methods. Most conveniently, the dye and binder are coated from a common solvent or, alternatively, from a mixture of miscible solvents. The dye-binder composition is coated by spin coating, spray coating, air knife coating, whirl coating or by any other suitable method. Useful dyes and binders are Dis- closed in U.S. Patent 4,380,769 and U.S. Patent 4,499,165. These patents also describe in detail methods for making the recording layer. Layers not containing a dye, such as layer of polystyrene are also useful.

One preferred optical recording layer is a dye-binder layer described in U. S. Patent 4,499,165. That patent describes an optical recording layer comprising a binder mixture and a dye, which layer is characterized in that the binder mixture (a) is amorphous at high dye to binder ratios, (b) exhibits a single thermal transition with no phase separation after annealing, (c) is solid at 20° C, and (d) comprises at least two different compounds each having at least two linking components joining one multivalent organic nucleus with at least two organic nuclei wherein at least one of the multivalent organic nucleus and the organic nuclei is a multicyclic aromatic nucleus.

The dye in the preferred dye-binder optical recording layer is not critical. Innumerable dyes are available and well-known. A preferred group of dyes which are especially compatible with the preferred binder mixtures are metal complexes of bis-[cis-1,2-bis-(alkyl, hydrogen, aryl or heterocyclic)ethylene-1,2-dithiene]. They are commonly referred to as metal dithiene complexes. Mixtures of these dyes can also be used.

Another preferred dye-binder composition comprises an amorphous layer of a binder and a oxoindolizine or oxoindolizinium dye as described in United States Patent 4,446,223 issued May 1, 1984. The preparation of these dyes is described in United States Patent 4,577,024 issued March 18, 1986. Reference is also made to related patent 4,538,159.

The invention can also be practiced using a compact disk format. In this format, an optically transparent material is coated with, in order, a thermally deformable optical recording layer, as described, a reflecting layer and a protective layer. Optical recording and erasure is accomplished through the optically transparent material. In this format, either the optically transparent material or the protective layer (including the reflective layer) can correspond to the "overcoat layer" of the invention. Either or both of these layers can provide the tension useful in assisting the deformations to flow back into place during erasure.

In the method of the present invention, information is encoded in the form of interspersed deformations in the recording layer. There are several methods available to affect the recording process. The preferred method is to modulate the incident power of the recording radiation provided by a single laser source. In accordance with the present invention, the power is modulated between two power levels as defined. This can be accomplished by changing the power level of the incident radiation or by varying the duty cycle of a laser modulated at high frequency. Either of these methods can be used to vary the energy delivered to the recording layer on a deformation by deformation basis. It is also contemplated to use two laser sources. The first is on substantially continuously during the overwrite process to provide a constant power at the low level. The second is varied between two levels, one typically zero power and the other selected so that when combined with the first, provides sufficient write power. Algorithms for encoding the written information and for reading the encoded information are within the skill of those in the art.

Relative motion is typically provided between the optical recording element and the source of the recording radiation. In a typical method, the element is moved relative to a fixed source of radiation as in a typical optical disk system. The alternative, where the optical recording element is held stationary and the radiation source is moved, is also within the scope of the invention.

The following example is submitted for a further understanding of the invention.

### Example

An optical recording element was prepared in the form of an optical disk. A diamond turned 5 1/4" diameter aluminum substrate was coated with a smoothing layer composition similar to that described in example 1 of U.S. Patent 4,619,890 described above. The smoothing layer was the same except that the solvent was butyl propionate and the "monomer 1" of the example was changed to an 80:20 mixture of 1,2,4-benzenetricarboxylic acid, tris (2-((1-oxo-2-_ propenyl)oxy)ethyl) ester and 2-propenoic acid-2-_ (benzoyloxy) ethyl ester. This smoothing layer composition was cured as described in the patent. The smoothing layer was then coated with a reflecting layer of 200 nm of gold. The disk was then coated with a solution of a dye and a binder in the ratio of 4:6 by weight and 2% solids. The solvent for the coating composition was a mixture consisting of 20% trichloropropane and 80% bromobenzene. The binder was a mixture as described in United States Patent 4,169,890 and was similar to "No. 11" in Col 21 and 22 of that patent. The mixture was a nonpolymeric, amorphous glass mixture which was the reaction product of 1,1,3-trimethyl-5-amino-3(p-aminophenyl) indan with 1-naphthoyl chloride (50.00 mole%); p-bromobenzoyl chloride (16.67 mole%); and p-methoxybenzoyl chloride (33.33 mole%).

The dye in the dye-binder mixture was the dye described in United States Patent 4,577,024 (mentioned above) at Col 45, the second structure in that column. The chemical name of the dye is: 2,3-di(2,4,6,-trimethylphenyl)-7-[2-(1,2- dimethyl-1,2,3,4-tetrahydro-6-quinolinyl)-1-ethenyl]-1-oxo-1H-indolizinium trifluoromethanesulfonate.

The disk was coated such that the thickness of the dye-binder optical recording layer was 113 nm. This corresponds to a thickness which is near the quarter-wave thickness for this layer at a reading wavelength of 780nm. (Half-wave thickness is about 235nm.)

The element was overcoated with a composition comprising silicon mono-oxide at a thickness of about 210 nm.

Information was recorded on the thus formed element by writing the information with a diode laser emitting 810 nm light at a power level of 10 mW.

The thus recorded information was then overwritten by using the same laser that was varied between 4 and 10 mW The record frequency was 2 MHz and the disk speed was 750 rpm to give a linear velocity of about 1 m/sec.

The element was overwritten ten times with different information. The performance, as measured by signal voltage using a read power of the same laser at 0.5 mW, was similar to the performance of the original information.

## Claims

1. A method for recording information by thermally deforming an optical recording layer material of an optical recording element, said layer having thereon an overcoat layer to keep the recording layer material in the vicinity of the deformation, said method comprising the step of erasing at substantially the same time as recording, said step comprising recording said information with a laser beam that is varied between two power levels, a first low power level that is sufficient to erase by flowing back material of any deformations that may already be in the recording layer and a second higher power level that is sufficient to push a side material to form deformations corresponding to said information.

2. A method according to claim 1 wherein said optical recording layer is a dye-binder layer.

3. A method according to claim 1 wherein said overcoat layer is a silicon mono-oxide layer.

4. A method according to claim 1 wherein said two power levels are provided by varying the power supplied by a single laser source.

5. A method according to claim 1 wherein said optical recording element comprises, in order, an optically transparent material, a thermally deformable recording layer, a reflecting layer and a protective layer wherein said step of erasing at the same time as recording is accomplished through said optically transparent material.

## Patentansprüche

1. Verfahren zur Aufzeichnung von Informationen durch thermische Deformation eines Materials einer optischen Aufzeichnungsschicht eines optischen Aufzeichnungselementes, wobei die Schicht eine Überzugsschicht aufweist, um das Material der Aufzeichnungsschicht in der Umgebung der Deformation zu halten, wobei das Verfahren umfaßt die Stufe der Löschung zu praktisch dem gleichen Zeitpunkt, bei dem die Aufzeichnung erfolgt, wobei die Stufe umfaßt die Aufzeichnung der Information mit einem Laserstrahl, der zwischen zwei Energieniveaus verändert wird, nämlich einem ersten niedrigen Energieniveau, das ausreicht zur Löschung durch Rückfluß von Material von Deformationen, die sich bereits in der Aufzeichnungsschicht befinden können und einem zweiten höheren Energieniveau, das ausreicht, um Material wegzudrücken, unter Erzeugung von Deformationen, die der Information entsprechen.

2. Verfahren nach Anspruch 1, bei dem die optische Aufzeichnungsschicht eine Farbstoff-Bindemittelschicht ist.

3. Verfahren nach Anspruch 1, bei dem die Überzugsschicht eine Siliziummonooxidschicht ist.

4. Verfahren nach Anspruch 1, bei dem die zwei Energieniveaus erzeugt werden durch Veränderung der Energie, die einem einzelnen Laser zugeführt wird.

5. Verfahren nach Anspruch 1, bei dem das optische Aufzeichnungselement in folgender Reihenfolge umfaßt: ein optisch transparentes Material, eine thermisch deformierbare Aufzeichnungsschicht, eine reflektierende Schicht und eine schützende Schicht, wobei die Stufe der Löschung zum gleichen Zeitpunkt wie die Aufzeichnung durch das optisch transparente Material durchgeführt wird.

## Revendications

1. Procédé pour enregistrer des informations en déformant thermiquement un matériau de couche d'enregistrement optique d'un élément d'enregistrement optique, ladite couche ayant sur celle-ci une couche de revêtement pour maintenir la couche d'enregistrement au voisinage de la déformation, ledit procédé comprenant l'étape consistant à effacer pratiquement au même moment que l'enregistrement, ladite étape comprenant l'enregistrement desdites informations avec un faisceau laser qui varie entre deux niveaux de puissance, un premier niveau à faible puissance qui est suffisant pour effacer en ramenant le matériau des déformations qui peuvent déjà exister dans la couche d'enregistrement et un second niveau de puissance plus élevé qui est suffisant pour écarter le matériau pour former des déformations correspondant auxdites informations.

2. Procédé selon la revendication 1, dans lequel ladite couche d'enregistrement optique est une couche de colorant-liant.

3. Procédé selon la revendication 1, dans lequel ladite couche de revêtement est une couche de monoxyde de silicium.

4. Procédé selon la revendication 1, dans lequel les deux niveaux de puissance sont délivrés en faisant varier la puissance délivrée par une seule source laser.

5. Procédé selon la revendication 1, dans lequel ledit élément d'enregistrement optique comprend, dans l'ordre, un matériau optiquement transparent, une couche d'enregistrement thermiquement déformable, une couche réfléchissante et une couche de protection dans lequel ladite étape consistant à effacer au même moment que l'enregistrement est accomplie à travers ledit matériau optiquement transparent.
